# EUROPÄISCHE PATENTANMELDUNG

(11) **EP 4 549 124 A1**
(43) Veröffentlichungstag der Anmeldung: **07.05.2025**
(21) Anmeldenummer: 23207637.2
(22) Anmeldetag: 03.11.2023
(51) Int. Cl.: B29C 45/14, B29C 65/02, B29C 65/00

(54) **BAUTEIL UND VERFAHREN ZUM HERSTELLEN EINES BESCHICHTETEN BAUTEILS**

(71) Anmelder: Splast Spolka z ograniczona odpowiedzialnoscia, 38-400 Krosno (PL)
(72) Erfinder: Czech, Adam, 09126 Chemnitz (DE); Kroll, Lothar, 01326 Dresden (DE); Emmrich, Jens, 09427 Ehrenfriedersdorf (DE); Osiecki, Tomasz, 09111 Chemnitz (DE); Strobel, Jens, 08294 Lößnitz (DE); Stacel, Monika, 38-500 Bykowce (PL); Majcherczyk, Henryk, 37-220 Kanczuga (PL); Sanocki, Marek, 38-400 Krosno (PL)
(74) Vertreter: Steiniger, Carmen

(57) **Zusammenfassung**

Die Erfindung betrifft ein Bauteil, das ein Basisteil mit einem Basisteilkörper und einer Basisteiloberfläche aufweist, auf der ein zumindest teilweise von wenigstens einem Kunststoff durchdrungenes textiles Flächengebilde unter Ausbildung einer Beschichtungsoberfläche angeordnet ist, wobei direkt auf der Beschichtungsoberfläche eine Deckschicht ausgebildet ist, sowie ein Verfahren zum Herstellen eines beschichteten Bauteils, bei dem auf einer Basisteiloberfläche eines Basisteilkörpers ein textiles Flächengebilde zumindest teilweise von wenigstens einem Kunststoff unter Ausbildung einer Beschichtungsoberfläche durchtränkt wird und eine Deckschicht auf die Beschichtungsoberfläche aufgebracht wird. Bei dem Bauteil sind der Basisteilkörper und die Basisteiloberfläche zumindest teilweise aus dem Kunststoff ausgebildet und ist das textile Flächengebilde zumindest teilweise an oder in den Kunststoff an- oder eingedrückt. Das Verfahren weist folgende Schritte auf: thermisches Erweichen von wenigstens der Basisteiloberfläche; und An- oder Eindrücken des textilen Flächengebildes an oder in die thermisch erweichte Basisteiloberfläche unter Ausbildung der eine Strukturgeometrie des textilen Flächengebildes auf dem Basisteil abbildenden Beschichtungsoberfläche.

## Beschreibung

Die vorliegende Erfindung betrifft ein Bauteil, das ein Basisteil mit einem Basisteilkörper und einer Basisteiloberfläche aufweist, auf der ein zumindest teilweise von wenigstens einem Kunststoff durchdrungenes textiles Flächengebilde unter Ausbildung einer Beschichtungsoberfläche angeordnet ist, wobei direkt auf der Beschichtungsoberfläche eine Deckschicht ausgebildet ist. Die Erfindung betrifft ferner ein Verfahren zum Herstellen eines beschichteten Bauteils, bei dem auf einer Basisteiloberfläche eines Basisteilkörpers ein textiles Flächengebilde zumindest teilweise von wenigstens einem Kunststoff unter Ausbildung einer Beschichtungsoberfläche durchtränkt wird und eine Deckschicht auf die Beschichtungsoberfläche aufgebracht wird.

Im Stand der Technik gibt es verschiedenste Möglichkeiten, um ein Bauteil mit einer Deckschicht zu versehen.

Aus der Druckschrift DE 20 2010 000 225 U1 ist es beispielsweise bekannt, auf Außenflächen von Böden oder Dächern eine Abdichtungsmembran aufzubringen, um das jeweilige Betonbauteil zum einen gegen Feuchtigkeit abzudichten und zum anderen mechanisch zu stabilisieren. Die mechanische Stabilisierung wird durch eine Vliesarmierung erreicht. Um diese herzustellen, wird auf das vorher gereinigte Betonbauteil eine erste flüssige Kunststoffmasse, wie beispielsweise eine Polyurethanflüssigschicht oder eine Schicht aus Polymethylmethacrylat-Harz, aufgebracht. Auf die erste flüssige Kunststoffschicht wird dann ein Vlies aufgedrückt, wobei es zumindest teilweise mit dem flüssigen Kunststoff durchtränkt wird. Anschließend wird eine weitere Kunststoffschicht als Deckschicht auf das Vlies aufgetragen. Das Material der weiteren Kunststoffschicht ist mit dem der ersten Kunststoffschicht verträglich und geht mit diesem eine Bindung ein.

Die Druckschrift DE 10 2019 134 888 A1 beinhaltet ein Verfahren zum Herstellen einer EMV- und Brandschutzbeschichtung auf einem Bauteil, wie einem Hochvoltspeicher eines Kraftfahrzeugs. Bei dem Verfahren werden in einem Presswerkzeug ein Faser-Kunststoff-Verbund und eine sogenannte In-Mould-Coating-Schutzschicht, die ein Material für einen EMV-Schutz, wie beispielsweise Aluminium, und ein Brandschutzmaterial, wie beispielsweise Graphit, umfasst, angeordnet und nachfolgend in dem Presswerkzeug miteinander verpresst. Bei dem Verpressen verbindet sich die In-Mould-Coating-Schutzschicht mit dem Faser-Kunststoff-Verbund.

Insbesondere im Automobilbau kommen häufig Bauteile aus Polypropylen zum Einsatz. Diese Bauteile werden beispielsweise zur Ausbildung von Seitentürenverkleidung und dergleichen verwendet. Um diesen Bauteilen ein verbessertes ästhetisches Äußeres und eine erhöhte Haltbarkeit zu verleihen, werden sie meist mit einer Deckschicht, wie einer Lackbeschichtung, versehen. Problematisch ist dabei häufig, dass die jeweilige Deckschicht schlecht auf dem zu beschichtenden Kunststoff-Bauteil hält.

Um eine verbesserte Haftfestigkeit von Deckschichten auf Kunststoff-Bauteilen zu erreichen, ist es bekannt, eine Plasmavorbehandlung des Kunststoffes durchzuführen oder spezielle PVD-Verfahren zum Beschichten anzuwenden. Diese Verfahren führen jedoch nur zu einer geringen Oberflächenhaftungsverbesserung und einer schwachen Stoß- und Kratzfestigkeit der aufgebrachten Kunststoffschicht. Darüber hinaus sind sie energieintensiv.

Die Beschichtung eines Kunststoff-Bauteils mit einem Kunststoff kann auch in einem elektrostatischen Beschichtungsverfahren erfolgen. Da z. B. unbehandeltes Polypropylen eine nur sehr geringe Zugänglichkeit für die elektrostatische Beschichtung besitzt, wird typischerweise die mit dem Kunststoff zu beschichtende Oberfläche des Polypropylen-Bauteils zunächst mit einem Kunststoff-Haftvermittler versehen. Wie es in der Druckschrift DE 693 08 244 T2 beschrieben ist, kann der Kunststoff-Haftvermittler beispielsweise aus einem Urethan-modifizierten chlorierten Polypropylen und einer elektrisch leitenden Substanz bestehen. Problematisch ist hier, dass auch der Kunststoff-Haftvermittler nur eine geringe Haftung auf dem Polypropylen aufweist. Darüber hinaus ist dieser Kunststoff-Haftvermittler anfällig für organische Lösungsmittel. Um diesen Problemen entgegenzuwirken, schlägt die Druckschrift DE 693 08 244 T2 vor, auf den auf das Polypropylen aufgebrachten Kunststoff-Haftvermittler einen Decküberzug aus einem organischen Lösungsmittel aufzubringen und erst danach die elektrostatische Beschichtung durchzuführen.

Alternativ wurden Speziallacke mit besserer Haltbarkeit auf Polypropylen entwickelt.

Sowohl die Kunststoff-Haftvermittler als auch die Speziallacke basieren zumeist auf schädlichen Inhaltsstoffen, weshalb die entsprechenden Beschichtungstechnologien mit einem hohen Aufwand zur ökologischen Schadstoffentsorgung verbunden sind.

In der Druckschrift DE 20 2005 006 129 U1 ist eine Technologie zur Herstellung von Verbundkörpern, die beispielsweise als Auskleidung für Innenräume von Kraftfahrzeugen verwendet werden, beschrieben, bei der als Alternative zu expandierbarem Polypropylen aufgeschäumtes Polystyrol zum Einsatz kommt. Da die Oberfläche von aufgeschäumtem Polystyrol sehr empfindlich ist, wird hier auf den aufgeschäumten Polystyrolkörper mit Hilfe eines Hotmelt-Klebers ein Vlies oder eine Folie aufkaschiert.

Ferner ist aus der Druckschrift DE 197 29 780 C1 ein Verfahren zur Herstellung hinterspritzter Kunststoffformteile mit dekorativ geprägter Oberflächenbeschichtung zur Ausbildung von Türinnenverkleidungen, Armaturenblenden und Verkleidungen von A-, B-, C- und D-Säulen von Fahrzeugen bekannt. Bei einer Ausführungsform des beschriebenen Verfahrens wird ein Dekormaterial verwendet, auf dessen Rückseite ein poröses Vlies fest mit dem Dekormaterial verbunden ist. Beim Hinterspritzen des Dekormaterials in einem Spritzgusswerkzeug nimmt das poröse Vlies teilweise das eingespritzte Kunststoffmaterial auf, wodurch eine bessere Verbindung des Dekormaterials mit dem hinterspritzten Kunststoff ermöglicht wird.

Im sogenannten DecoJect-Verfahren kann auf einem Kunststoffbauteil eine Folienbeschichtung dadurch erzeugt werden, dass eine Folie in einem Vakuum-Tiefziehprozess hinterspritzt wird.

In den bekannten Beschichtungsverfahren beeinflussen jeweils die Eigenschaften der verwendeten Kunststoffe, wie deren unterschiedliche chemische Beständigkeiten sowie deren niedrige Steifigkeiten und Formstabilität, das jeweilige Beschichtungsverfahren sowie dessen Ergebnisse maßgeblich.

Es ist daher die Aufgabe der vorliegenden Erfindung, ein kunststoffbeschichtetes Bauteil und ein Verfahren zu dessen Herstellung zur Verfügung zu stellen, bei welchen die Deckschicht eine hohe Haftfestigkeit aufweist, wobei zur Herstellung des Bauteils auf bedenkliche Schadstoffe und hohen Energieeinsatz verzichtet werden kann und die Herstellung in großserientaugliche Technologien integriert werden kann.

Diese Aufgabe wird zum einen durch ein Bauteil gelöst, das ein Basisteil mit einem Basisteilkörper und einer Basisteiloberfläche aufweist, auf der ein zumindest teilweise von wenigstens einem Kunststoff durchdrungenes textiles Flächengebilde unter Ausbildung einer Beschichtungsoberfläche angeordnet ist, wobei direkt auf der Beschichtungsoberfläche wenigstens eine Deckschicht ausgebildet ist, wobei der Basisteilkörper und die Basisteiloberfläche zumindest teilweise aus dem wenigstens einen Kunststoff ausgebildet sind und das textile Flächengebilde zumindest teilweise in den wenigstens einen Kunststoff eingedrückt ist.

Das erfindungsgemäße Bauteil weist ein Basisteil auf, das den zumindest teilweise aus dem wenigstens einen Kunststoff ausgebildeten Basisteilkörper und eine zumindest teilweise aus dem wenigstens einen Kunststoff ausgebildete Basisteiloberfläche aufweist. Das erfindungsgemäße Bauteil weist ferner das zumindest teilweise in die Basisteiloberfläche eingedrückte textile Flächengebilde und die darauf ausgebildete Deckschicht auf. Das Basisteil ist dabei das zu beschichtende Teil. Das textile Flächengebilde ist an der Basisteiloberfläche in form- und/oder stoffschlüssiger Verbindung mit dem Kunststoff der Basisteiloberfläche. Dies wird bei dem erfindungsgemäßen Bauteil dadurch realisiert, dass das textile Flächengebilde derart in oder an die Basisteiloberfläche gedrückt ist, dass der Kunststoff der Basisteiloberfläche das textile Flächengebilde zumindest teilweise durchdringt.

Das Basisteil kann eine einfache Platte sein, ist aber bevorzugt ein nicht flaches Teil, weist also eine bestimmte Form auf. Diese Form kann wenigstens eine Senke und/oder wenigstens eine Erhebung aufweisen. Die wenigstens eine Senke und/oder Erhebung kann sich von einem flachen Abschnitt des Basisteils in einem Winkel oder in einem Bogen jeweils nach unten bzw. nach oben erstrecken. Insgesamt weist das Basisteil vorzugsweise eine in sich geschlossene Basisteiloberfläche auf, kann aber auch Aussparungen oder Lochstrukturen aufweisen. Hinsichtlich seiner Außenkontur ist das Basisteil variabel gestaltbar. Typischerweise weist das Basisteil eine durchgehend gleiche Materialdicke auf, kann aber auch unterschiedliche oder allmählich ineinander übergehende Materialdicken aufweisen. Das Basisteil kann an seiner Basisteiloberfläche Kanten oder Ecken aufweisen. Bevorzugt sind solche Kanten oder Ecken nicht scharf, sondern abgerundet, sodass das textile Flächengebilde an diesen Stellen nicht reißt.

Bei der vorliegenden Erfindung sind sowohl der Basisteilkörper als auch die Basisteiloberfläche wenigstens aus dem wenigstens einen Kunststoff ausgebildet, weisen also jeweils den wenigstens einen Kunststoff auf. Der wenigstens eine Kunststoff, aus dem der Basisteilkörper zumindest teilweise ausgebildet ist, umfasst oder ist vorzugsweise ein Thermoplast. Die Basisteiloberfläche kann beispielsweise aus Polyurethan ausgebildet sein. Neben dem wenigstens einen Kunststoff können der Basisteilkörper und die Basisteiloberfläche auch wenigstens ein weiteres Material, wie beispielsweise eine Faserverstärkung, aufweisen. Das Basisteil kann durchgängig aus ein und demselben Material bestehen, kann aber auch eine hybride Struktur sein, die beispielsweise ein Faser-Halbzeug beinhaltet.

Vorzugsweise ist der wenigstens eine Kunststoff Polypropylen, kann jedoch auch ein anderer Kunststoff sein.

Das Basisteil kann nur aus dem wenigstens einen Kunststoff ausgebildet sein. Es ist jedoch von Vorteil, wenn das Basisteil eine Faserverstärkung aufweist. Dadurch ist es besonders gut für das erfindungsgemäße Verfahren, in welchem ein bestimmter Druck auf das Basisteil wirkt, geeignet.

Da das textile Flächengebilde eine bestimmte Strukturgeometrie aufweist, bildet die mittels des in oder an die Basisteiloberfläche teilweise ein- oder angedrückten textilen Flächengebildes ausgebildete Beschichtungsoberfläche diese Strukturgeometrie auf dem Basisteil ab. Dadurch weist die Beschichtungsoberfläche eine sich aus der Strukturgeometrie des textilen Flächengebildes ergebende Oberflächenrauheit auf.

Auf der Beschichtungsoberfläche haftet die direkt auf die Beschichtungsoberfläche aufgebrachte Deckschicht deutlich besser als auf der unbehandelten Basisteiloberfläche und dauerhaft.

Das textile Flächengebilde bildet eine in sich stabile und trotzdem verform- und drapierbare Trägerstruktur, die in einer oberflächigen Schicht des auf dem wenigstens einen Kunststoff basierenden Basisteils vorwiegend mechanisch fixiert ist.

Das textile Flächengebilde weist eine Dicke auf, die es problemlos erlaubt, dass sich das textile Flächengebilde an die Basisteiloberfläche anschmiegen kann, auch wenn diese nicht eben, wie z. B. gewölbt, ist. Vorzugsweise ist die Dicke des textilen Flächengebildes homogen. Beispielsweise liegt die Dicke des textilen Flächengebildes in einem Bereich von 0,1 mm bis 3 mm, vorzugsweise in einem Bereich von 0,3 mm bis 1,5 mm.

Das textile Flächengebilde hat zudem den Vorteil, dass es aufgrund seiner leichten Verformbarkeit und Drapierbarkeit ohne Weiteres in gängige Technologien der Kunststoffverarbeitung, wie in einen Spritzgießprozess oder in einen Thermoumformprozess, integrierbar ist.

Das textile Flächengebilde kann ein- oder mehrlagig sein. Wenn das textile Flächengebilde mehrlagig ausgebildet ist, also einen Lagenstapel (Stack) ausbildet, können eine Unterseite und eine Oberseite dieses Stacks unterschiedlich beschaffen sein. Damit kann eine optimale Anbindung einerseits an das Basisteil und andererseits an die Kunststoffdeckschicht gewährleistet werden. Das textile Flächengebilde kann eine einzige geschlossene Lage sein, kann aber auch aus mehreren nebeneinander liegenden oder einander überlappenden textilen Lagen ausgebildet sein.

Faserart(en) und Faseranordnung sowie eine gegebenenfalls verwendete Materialmischung des textilen Flächengebildes sind je nach bei dem Basisteil zum Einsatz kommendem Kunststoff wählbar.

In das textile Flächengebilde kann wenigstens eine Zusatzkomponente eingebracht oder eingearbeitet sein, die eine zusätzliche Funktionalisierung der Beschichtungsoberfläche bewirkt. Somit kann das erfindungsgemäße Bauteil vorteilhaft als Interieur-Komponente, beispielsweise in einem Fahrzeug, oder als Teil eines Möbelstückes oder eines Haushaltsgegenstandes eingesetzt werden, wobei als Funktionalisierung beispielsweise wenigstens ein Sensor und/oder eine Heizung, die beispielsweise durch eine Drahteinbringung in das textile Flächengebilde realisierbar ist, oder dergleichen in dem Bauteil integriert sein kann.

Das textile Flächengebilde ist vorzugsweise ein Vlies. Das Vlies kann Fasern desselben Materials oder unterschiedliche Faserarten aufweisen. Beispielsweise kann das Vlies aus einer Kombination von weichen und weniger weichen Fasern zusammengesetzt sein. Das Vlies ist vorzugsweise ein mechanisch oder thermisch verfestigtes Vlies.

In einer vorteilhaften Ausführungsform des erfindungsgemäßen Bauteils ist das textile Flächengebilde mehrlagig ausgebildet, wobei eine Unterseite des textilen Flächengebildes eine andere Strukturgeometrie als eine Oberseite des textilen Flächengebildes aufweist. Somit kann das textile Flächengebilde einerseits gut an das Basisteil und andererseits gut an die Deckschicht angebunden werden.

Die Deckschicht, die ein- oder mehrlagig ausgebildet sein kann, weist vorzugsweise eine Lackschicht auf.

In einer bevorzugten Ausführungsform des erfindungsgemäßen Bauteils ist dieses auf einer der Beschichtungsoberfläche gegenüberliegenden Seite des Basisteils hinterspritzt. Hierbei wird vorzugsweise eine Kombination von Thermoformen zum Verformen des Basisteilkörpers und Spritzgießen zum Hinterspritzen des Basisteilkörpers in einem Prozess angewendet. Die Hinterspritzung verstärkt das Bauteil einseitig. Die Hinterspritzung kann beispielsweise in Form einer Gitterstruktur ausgebildet sein. Durch die Hinterspritzung kann dem Bauteil eine besonders gute mechanische Stabilität verliehen werden.

Die Aufgabe wird ferner durch ein Verfahren zum Herstellen eines kunststoffbeschichteten Bauteils, bei dem auf einer Basisteiloberfläche eines Basisteils ein textiles Flächengebilde zumindest teilweise von wenigstens einem Kunststoff unter Ausbildung einer Beschichtungsoberfläche durchtränkt wird und eine Deckschicht auf die Beschichtungsoberfläche aufgebracht wird, gelöst, wobei ein Basisteilkörper und eine Basisteiloberfläche des Basisteils zumindest teilweise aus dem Kunststoff ausgebildet sind und das Verfahren folgende Schritte aufweist:
- thermisches Erweichen von wenigstens der Basisteiloberfläche des Basisteils; und
- An- oder Eindrücken des textilen Flächengebildes an oder in die thermisch erweichte Basisteiloberfläche unter Ausbildung der eine Strukturgeometrie des textilen Flächengebildes auf dem Basisteil abbildenden Beschichtungsoberfläche.

Ziel des erfindungsgemäßen Verfahrens ist es, das Basisteil mit der Deckschicht zu beschichten. Hierfür wird der Kunststoff, aus dem die Basisteiloberfläche zumindest teilweise ausgebildet ist, bis zu deren Erweichen erwärmt. Ferner wird das textile Flächengebilde an oder in die erweichte Basisteiloberfläche gedrückt. Dieses An- oder Eindrücken kann beispielsweise mittels eines Aufwalzens und/oder Aufpressens des textilen Flächengebildes auf die Basisteiloberfläche erfolgen.

Das textile Flächengebilde kann sich homogen über die Basisteiloberfläche erstrecken. Es ist jedoch auch möglich, dass das textile Flächengebilde beispielsweise in Ecken oder an Kanten des Basisteils Falten oder dergleichen aufweist.

Zum Aufbringen des textilen Flächengebildes auf das Basisteil kommt bei dem erfindungsgemäßen Verfahren kein Kleber zum Einsatz. Die Verbindung zwischen dem Basisteil und dem textilen Flächengebilde erfolgt ausschließlich durch den Kunststoff, der in der Basisteiloberfläche, vorzugsweise in dem gesamten Basisteil, bereits vorhanden ist und der bei seinem Erweichen das textile Flächengebilde wenigstens teilweise durchdringt.

Dabei durchdringt der Kunststoff wenigstens teilweise das textile Flächengebilde. Im Ergebnis liegt eine stoff- und/oder formschlüssige Verbindung zwischen dem Kunststoff des Basisteils und dem textilen Flächengebilde vor.

Bedingt durch die Struktur des textilen Flächengebildes, deren Oberfläche nicht glatt ist, bildet sich nach dem An- oder Eindrücken des textilen Flächengebildes an oder in die Basisteiloberfläche eine nicht glatte Struktur an der Oberfläche des Basisteils. Entsprechend weist die Beschichtungsoberfläche, die sich nach dem An- oder Eindrücken des textilen Flächengebildes an oder in die Basisteiloberfläche an der Oberfläche des Basisteils bildet, eine der Strukturgeometrie des textilen Flächengebildes entsprechende Topografie auf. Diese sorgt für eine besonders gute Haftung der auf die Beschichtungsoberfläche aufgebrachten Deckschicht. Diese gute Haftung besteht auch dann, wenn die Deckschicht auf einer glatten Oberfläche des Basisteils aufgrund dessen Materialzusammensetzung nur schlecht halten würde.

Da aufgrund der Beschaffenheit der Beschichtungsoberfläche unterschiedlichste Beschichtungsmaterialien sehr gut auf dieser haften, eröffnet das erfindungsgemäße Verfahren eine breite Vielfalt an Materialien, die zur Ausbildung der Deckschicht verwendet werden können. Dadurch kann Deckschicht beispielsweise aus einem Material gewählt werden, das besonders stoß- und kratzfest ist.

Ferner können bei dem erfindungsgemäßen Verfahren mit dem Aufbringen der Deckschicht sehr gut etwaige Fehlstellen, wie Einfallstellen oder dergleichen, des Basisteils ausgebessert werden. Dies kann schon in einem Formwerkzeug, in welchem das Basisteil in eine gewünschte Form geformt wird, erfolgen.

Bei dem erfindungsgemäßen Verfahren entfällt aufgrund der ausgebildeten formschlüssigen und gegebenenfalls stoffschlüssigen Verbindung zwischen dem Basisteil, dem textilen Flächengebilde und der Deckschicht die Notwendigkeit des Einsatzes bedenklicher Schadstoffe.

Das erfindungsgemäße Verfahren kann in großserientaugliche Technologien, wie in Spritzgieß- oder Thermoumformprozesse, integriert werden, was wiederum die Fertigung im Sinne eines One-Shot-Verfahrens erlaubt.

Das erfindungsgemäße Verfahren hat ferner den Vorteil, dass es auch bei höheren Wandstärken bzw. Materialdicken des Basisteils angewendet werden kann.

Das erfindungsgemäße Verfahren kann so ausgeführt werden, dass zunächst das Basisteil oder zumindest dessen Basisteiloberfläche erwärmt wird, bis die Basisteiloberfläche erweicht ist, woraufhin das textile Flächengebilde auf die erweichte Basisteiloberfläche aufgebracht und dann an oder in die erweichte Basisteiloberfläche an- oder eingedrückt wird.

Alternativ dazu kann das Basisteil gemeinsam mit dem textilen Flächengebilde erwärmt werden, bis die Basisteiloberfläche erweicht ist. Dabei kann schon während des Erwärmens das textile Flächengebilde gegen das Basisteil und/oder das Basisteil gegen das textile Flächengebilde gedrückt werden. Der Druck des textilen Flächengebildes auf das Basisteil und/oder des Basisteils auf das textile Flächengebilde kann jedoch auch erst nach dem Erweichen der Basisteiloberfläche aufgebaut werden.

Die Deckschicht besteht vorzugsweise aus Lack und/oder Silikon, kann jedoch auch eine Deckschicht mit einem oder mehreren anderen Material(ien) sein.

Die Beschichtung kann auf die Beschichtungsoberfläche auf verschiedene Weise aufgebracht werden. Beispielsweise kann die Deckschicht durch Fluten, z. B. in einem In-Mould-Coating-Prozess (IMC) erfolgen. Dabei erfolgt das Aufbringen der Deckschicht in demselben Werkzeug, in dem auch das textile Flächengebilde und das Basisteil gegeneinander gedrückt werden. Das Aufbringen der Deckschicht kann jedoch auch in einem anderen Werkzeug geschehen.

Es ist aber auch möglich, dass die Deckschicht erst nach dem An- oder Eindrücken des textilen Flächengebildes an oder in die Basisteiloberfläche erfolgt. Bei dem Aufbringen der Deckschicht kann die Beschichtungsoberfläche noch warm oder auch schon abgekühlt sein. Dabei kann die Deckschicht beispielsweise durch Sprühen, Streichen, Aufwalzen o. ä. auf die Beschichtungsoberfläche aufgebracht werden.

Das erfindungsgemäße Verfahren besitzt den Vorteil, dass für die verwendeten Verfahrensschritte nur relativ wenig Energie aufgebracht werden muss. So können beispielsweise das Erweichen der Basisteiloberfläche und das An- oder Eindrücken des textilen Flächengebildes an oder in die erweichte Basisteiloberfläche in einem Arbeitsgang erfolgen. Entsprechend weist das erfindungsgemäße Verfahren gegenüber den eingangs erwähnten Verfahren aus dem Stand der Technik eine verbesserte CO₂-Bilanz auf.

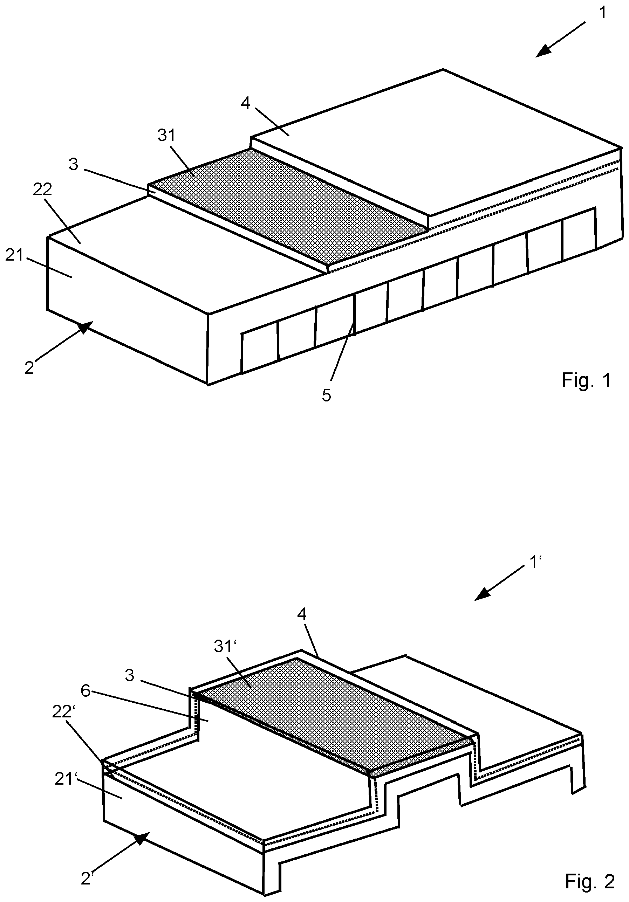

Bevorzugte Ausführungsform des erfindungsgemäßen Bauteils sind schematisch in den Figuren 1 und 2 dargestellt.

In Figur 1 ist beispielhaft schematisch ein im Querschnitt U-förmiges erfindungsgemäßes Bauteil 1 mit ebener, beschichteter Oberfläche und einer Hinterspritzung 5 in einer perspektivischen, teilweise aufgeschnittenen Seitenansicht zur Veranschaulichung der Schichtabfolge des Bauteils 1 dargestellt. Figur 2 zeigt schematisch eine Ausführungsform eines erfindungsgemäßen Bauteils 1' in einer perspektivischen Seitenansicht, das eine Erhebung 6 an seiner Oberfläche aufweist und das ebenfalls auf seiner Oberfläche beschichtet ist.

Die Bauteile 1, 1` weisen jeweils ein Basisteil 2, 2' auf. Das Basisteil 2, 2' besitzt jeweils einen Basisteilkörper 21, 21' mit einer Oberseite, einer Unterseite und Seitenkanten. In der gezeigten Darstellung bildet jeweils die Oberseite des Basisteils 2, 2` eine Basisteiloberfläche 22, 22'. In der gezeigten Ausführungsform ist das Basisteil 2, 2' jeweils ein Halbzeug aus faserverstärktem Polypropylen. In anderen, nicht gezeigten Ausführungsformen der vorliegenden Erfindung kann das Basisteil auch aus einem anderen Kunststoff bestehen und/oder keine Faserverstärkung aufweisen.

In den Kunststoff der Basisteiloberfläche 22, 22` ist jeweils ein textiles Flächengebilde 3 eingelassen. Dabei ist das textile Flächengebilde 3 von seiner Unterseite her von dem Kunststoff der Basisteiloberfläche 22, 22' durchdrungen und umgeben. Dadurch ist das textile Flächengebilde 3 in der Basisteiloberfläche 22, 22' mechanisch verankert. In den gezeigten Ausführungsbeispielen besteht das textile Flächengebilde 3 jeweils aus einem Vlies. In anderen, nicht gezeigten Ausführungsformen der vorliegenden Erfindung kann anstelle des Vlieses auch ein anderes textiles Flächengebilde 3, wie beispielsweise ein Gewebe, ein Gewirke, ein Gestrick oder auch ein Stapel von textilen Lagen, verwendet werden.

In der gezeigten Ausführungsform besteht das textile Flächengebilde 3 aus synthetischen Fasern, wie beispielsweise aus Polypropylenfasern, Polyethylenfasern, Polyamidfasern, Polyethylenterephthalatfasern, Polybuthylentherphthalatfasern und/oder Edelstahlfasern. In anderen Ausführungsformen der vorliegenden Erfindung kann das textile Flächengebilde 3 auch aus Naturfasern, wie aus Baumwollfasern, tierischen Wollfasern, Viskosefasern, Glasfasern, Basaltfasern und/oder Carbonfasern, oder aus einer Mischung aus synthetischen und Naturfasern ausgebildet sein

In den Ausführungsformen, die in den Figuren 1 und 2 gezeigt sind, ragt jeweils das textile Flächengebilde 3 mit seiner Oberseite über die Basisteiloberfläche 22, 22' hinaus. Durch die Strukturgeometrie des textilen Flächengebildes 3 ergibt sich auf dem Basisteil 2, 2' eine raue Oberfläche, die in der Beschreibung der vorliegenden Erfindung als Beschichtungsoberfläche 31 bezeichnet wird.

Auch wenn in anderen, nicht gezeigten Ausführungsformen der vorliegenden Erfindung das textile Flächengebilde 3 ganz von dem Kunststoff des Basisteils 2, 2' überdeckt ist, ist das textile Flächengebilde 3 nur soweit in der Basisteiloberfläche 22, 22' versenkt, dass sich die Strukturgeometrie des textilen Flächengebildes 3 auf der Oberseite des Basisteils 2, 2' abbildet, sich also eine Beschichtungsoberfläche 31, 31' aus dem Basisteil 2, 2` bildet.

Die Beschichtungsoberfläche 31, 31` ist jeweils mit einer Deckschicht 4 beschichtet. In den gezeigten Ausführungsformen ist die Deckschicht 4 jeweils eine Lackschicht. Speziell weist die Lackschicht in der gezeigten Ausführungsform Polyurethan auf, kann jedoch auch ein anderes Kunststoffmaterial aufweisen. Durch die Strukturgeometrie der Beschichtungsoberfläche 31, 31' ist die Deckschicht 4 optimal an die Beschichtungsoberfläche 31, 31' angebunden.

Das in Figur 1 gezeigte Bauteil 1 ist auf seiner nicht mit der Deckschicht 4 beschichteten Rückseite im Bereich der mit einer Hinterspritzung 5 versehen. In dem gezeigten Ausführungsbeispiel besteht die Hinterspritzung aus Streben aus Polypropylen, kann aber auch eine andere Form aufweisen und/oder aus eine anderen Kunststoffmaterial ausgebildet sein. Wie es anhand des in Figur 2 gezeigten Bauteils 1' zu sehen ist, kann die Hinterspritzung 5 auch weggelassen werden.

Das Bauteil 1 wurde mittels folgender Verfahrensschritte hergestellt:
Zunächst wurde eine später das Basisteil 2 ausbildende Kunststoffplatte, die in der gezeigten Ausführungsform aus faserverstärktem Polypropylen, also als Faserverbundplatte, ausgebildet ist, auf eine Temperatur, die in einem Bereich von 210 °C bis 230 °C liegt, erwärmt. Die erwärmte Kunststoffplatte wurde dann zu einer Spritzgussform transportiert und dort mit einem textiles Flächengebilde 3, das in der gezeigten Ausführungsform ein Vlies, vorzugsweise ein nadelverfestigtes Wetlaid-Vlies, ist, derart in eine Werkzeugkavität einer Spritzgussform eingelegt, dass das textile Flächengebilde 3 beim Schließen der Spritzgussform die Kunststoffplatte überdeckt.

Dabei wurde das textile Flächengebilde 3 so angeordnet, dass es sich auf der Stempelseite der Spritzgussform befindet.

Dann wurde die Spritzgussform geschlossen und die Kunststoffplatte mit dem textilen Flächengebilde 3 in der Spritzgussform bis zur Erweichung der Kunststoffplatte beispielsweise bei einer Temperatur in einem Bereich von 120 °C bis 160 °C, vorzugsweise bei 140 °C, erwärmt und gleichzeitig das textile Flächengebilde 3 gegen die Kunststoffplatte gedrückt. Die Werkzeugtemperatur der Spritzgussform betrug dabei ca. 80 °C.

In der geschlossenen Spritzgussform erfolgte ein Umformen der Kunststoffplatte. Dabei hat sich das textile Flächengebilde 3 in eine Oberfläche der Kunststoffplatte eingedrückt, die hier die oben beschriebene Basisteiloberfläche 22 bildet. Gleichzeitig dazu verformte sich die Kunststoffplatte mit dem darauf befindlichen textilen Flächengebilde in die durch die Spritzgussform vorgegebene Bauteilstruktur. In dem dargestellten Beispiel bildete sich bei dieser Verformung die U-Struktur des Basisteils 2 aus, wobei sich das textile Flächengebilde 3 an diese U-Struktur angepasst hat. Das heißt, das textile Flächengebilde 3 legte sich an die durch die Spritzgussform vorgegebene Struktur des sich aus der Kunststoffplatte ergebenden Basisteils 2 an.

Nach dem Umformen erfolgte zunächst ein Hinterspritzen der umgeformten Kunststoffplatte auf einer dem textilen Flächengebilde 3 gegenüberliegenden Rückseite des Basisteils 2. Hierzu wurde auf der Rückseite des Basisteils 2 flüssiger Kunststoff in die Spritzgussform gespritzt, wodurch sich die gitterstrebenförmige Hinterspritzung 5 und eine Besäumung auf der Rückseite des Bauteils 1 ausgebildet hat.

Zur Ausbildung der Hinterspritzung 5 wurde in dem dargestellten Beispiel Polypropylen verwendet. Man kann jedoch auch einen anderen Kunststoff, der mit dem zum Einsatz kommenden Basisteil 2 bzw. der Kunststoffplatte eine entsprechende Verbindung eingehen kann, zum Ausbilden der Hinterspritzung 5 verwenden. Beispielsweise eignet sich dann, wenn das Basisteil 2 bzw. die Kunststoffplatte aus Polypropylen besteht, Polypropylen oder faserverstärktes Polypropylen zur Ausbildung der Hinterspritzung 5. Besteht das Basisteil 2 bzw. die Kunststoffplatte aus Polycaprolactam (PA6), kann mit PA6.6, Polyetheretherkaton (PEEK) oder ähnlichen Kunststoffen, jeweils ohne oder mit Verstärkungsfasern, hinterspritzt werden.

In dem beschriebenen Ausführungsbeispiel war in der Spritzgussform eine weitere Kavität, in welche das Bauteil 1 transferiert wurde.

Dann wurde direkt auf die Vorderseite des Basisteils 2, auf welcher sich das textile Flächengebilde 3 befindet, Lack zur Ausbildung der Deckschicht 4 in die Spritzgussform gegeben. In der gezeigten Ausführungsform kam zur Ausbildung der Deckschicht 4 ein 2-Komponenten-Polyurethan-Lack zum Einsatz. In anderen Ausführungsformen der vorliegenden Erfindung kann auch ein anderes Beschichtungsmaterial zum Ausbilden der Deckschicht 4 eingesetzt werden.

Die Deckschicht 4 verbindet sich nicht chemisch mit dem Basisteil 2 und/oder dem textilen Flächengebilde 3, hält aber trotzdem fest daran.

Das Bauteil 1' aus Figur 2 wurde - bis auf das Weglassen der Hinterspritzung 5 - auf analoge Weise hergestellt.

In anderen Ausführungsformen des erfindungsgemäßen Verfahrens kann die Erwärmung des Basisteils 2, 2' auch in einer anderen Erwärmungsvorrichtung, wie beispielsweise in einem Ofen, also nicht wie oben beschrieben in einer Spritzgussform, erfolgen. In diesem Fall kommt ferner eine Andrückvorrichtung zum Einsatz, mit der das textile Flächengebilde 3 gegen die erweichte Basisteiloberfläche 22, 22' gedrückt wird.

## Patentansprüche

1. Bauteil (1, 1'), das ein Basisteil (2, 2') mit einem Basisteilkörper (21, 21') und einer Basisteiloberfläche (22, 22') aufweist, auf der ein zumindest teilweise von wenigstens einem Kunststoff durchdrungenes textiles Flächengebilde (3) unter Ausbildung einer Beschichtungsoberfläche (31, 31') angeordnet ist, wobei direkt auf der Beschichtungsoberfläche (31, 31') eine Deckschicht (4) ausgebildet ist, **dadurch gekennzeichnet, dass** der Basisteilkörper (21, 21') und die Basisteiloberfläche (22, 22') zumindest teilweise aus dem wenigstens einen Kunststoff ausgebildet sind und das textile Flächengebilde (3) zumindest teilweise in den wenigstens einen Kunststoff eingedrückt ist.

2. Bauteil nach Anspruch 1, **dadurch gekennzeichnet, dass** das textile Flächengebilde (3) mehrlagig ausgebildet ist und eine Unterseite des textilen Flächengebildes (3) eine andere Strukturgeometrie als eine Oberseite des textilen Flächengebildes (3) aufweist.

3. Bauteil nach einem der vorhergehenden Ansprüche, **dadurch gekennzeichnet, dass** das Bauteil (1, 1') auf einer der Beschichtungsoberfläche (31, 31') gegenüberliegenden Seite des Basisteils (2, 2') hinterspritzt ist.

4. Bauteil nach einem der vorhergehenden Ansprüche, **dadurch gekennzeichnet, dass** der wenigstens eine Kunststoff Polypropylen ist.

5. Bauteil nach einem der vorhergehenden Ansprüche, **dadurch gekennzeichnet, dass** das textile Flächengebilde (3) ein Vlies aufweist.

6. Bauteil nach einem der vorhergehenden Ansprüche, **dadurch gekennzeichnet, dass** die Deckschicht (4) eine Lackschicht und/oder eine Silikonschicht aufweist.

7. Verfahren zum Herstellen eines beschichteten Bauteils (1, 1'), bei dem auf einer Basisteiloberfläche (22, 22') eines Basisteils (2, 2') ein textiles Flächengebilde (3) zumindest teilweise von wenigstens einem Kunststoff unter Ausbildung einer Beschichtungsoberfläche (31, 31') durchtränkt wird und eine Deckschicht (4) auf die Beschichtungsoberfläche (31, 31') aufgebracht wird, **dadurch gekennzeichnet, dass** ein Basisteilkörper (21, 21') und die Basisteiloberfläche (22, 22`) des Basisteils (2, 2') zumindest teilweise aus dem wenigstens einen Kunststoff ausgebildet sind und das Verfahren folgende Schritte aufweist:
- thermisches Erweichen von wenigstens der Basisteiloberfläche (22, 22'); und
- An- oder Eindrücken des textilen Flächengebildes (3) an oder in die thermisch erweichte Basisteiloberfläche (22, 22') unter Ausbildung der eine Strukturgeometrie des textilen Flächengebildes (3) auf dem Basisteil (2, 2') abbildenden Beschichtungsoberfläche (31, 31').

8. Verfahren nach Anspruch 7, **dadurch gekennzeichnet, dass** das textile Flächengebilde (3) vor dem thermischen Erweichen der Basisteiloberfläche (22, 22') auf die Basisteiloberfläche (22, 22') aufgebracht wird und auf dieser verbleibt, bis die Basisteiloberfläche (22, 22') thermisch erweicht ist, und dann das An- oder Eindrücken des textilen Flächengebildes (3) an oder in die thermisch erweichte Basisteiloberfläche (22, 22') erfolgt.
